# EUROPÄISCHE PATENTANMELDUNG

(11) **EP 4 534 866 A1**
(43) Veröffentlichungstag der Anmeldung: **09.04.2025**
(21) Anmeldenummer: 23202084.2
(22) Anmeldetag: 06.10.2023
(51) Int. Cl.: F16C 19/54, F03D 80/70, F16C 33/78

(54) **WINDENERGIEANLAGE**

(71) Anmelder: Wobben Properties GmbH, 26607 Aurich (DE)
(72) Erfinder: Meier, Andreas, 26835 Neukamperfehn (DE)
(74) Vertreter: Eisenführ Speiser

(57) **Zusammenfassung**

Windenergieanlage mit einem Rotor (106) mit einem Rotorträger (140), einem Maschinenträger (110) und einem Achszapfen (130) , welcher drehfest mit dem Maschinenträger (110) gekoppelt ist. Ferner ist ein Drehlager (300) zwischen dem Achszapfen (130) und dem Rotorträger (140) vorgesehen. Des Weiteren ist eine Dichtung (400), welche als Axialdichtung ausgestaltet ist und eine Dichtlippe (411) aufweist, vorgesehen. Die Dichtlippe (411) liegt an einer Gegenlauffläche (311) an, welche Teil des Lagers (300) ist.

## Beschreibung

Die vorliegende Erfindung betrifft eine Windenergieanlage.

Eine Windenergieanlage weist einen Turm, einen Maschinenträger und einen aerodynamischen Rotor auf, welcher eine drehbare Rotornabe und typischerweise drei Rotorblätter aufweist. Die Rotornabe ist dabei über ein Lager mit einem Achszapfen gekoppelt, welcher wiederum mit dem Maschinenträger drehfest verbunden ist. Dieses Lager stellt typischerweise ein Hauptlager der Windenergieanlage dar. Dieses Hauptlager muss sehr große Belastungen während des Betriebs der Windenergieanlage aufnehmen können.

Es ist eine Aufgabe der vorliegenden Erfindung, eine Windenergieanlage mit einem Lager für den aerodynamischen Rotor vorzusehen, welches weniger anfällig für Toleranzen bei einer Dichtung des Lagers ist.

Diese Aufgabe wird durch eine Windenergieanlage nach Anspruch 1 gelöst.

Somit wird eine Windenergieanlage mit einem aerodynamischen Rotor und einem Maschinenträger vorgesehen. An dem Maschinenträger kann ein Achszapfen drehfest befestigt sein. Der aerodynamische Rotor weist eine Rotornabe auf, welche über ein Hauptlager auf dem drehfesten Achszapfen gelagert ist. Das Lager kann mittels einer Axialdichtung abgedichtet sein. Hierbei kann ein Teil der Dichtung, beispielsweise eine Dichtlippe, an einer Gegenfläche des Lagers axial anliegen.

Mit der axial ausgestalteten Dichtung kann eine Dichtung mit einer verbesserten Toleranz vorgesehen sein. Ferner kann die Dichtung an dem Rotorträger gekoppelt sein, so dass es bei einer Drehung des Rotors nicht zu einer axialen Bewegung der Dichtung führt.

Gemäß einem Aspekt der vorliegenden Erfindung ist das Lager als ein Rollenlager mit einem Innenring und einem Außenring ausgestaltet. Der Innenring weist eine Gegenlauffläche auf, an welcher die Dichtung anliegt.

Gemäß einem Aspekt kann das Lager als ein fettgeschmiertes Wälzlager ausgestaltet sein. Die Axialdichtung kann ferner dazu dienen, das Fett für das fettgeschmierte Wälzlager innerhalb des gewünschten Volumens zu halten.

Die Axialdichtung weist eine axiale Stirnfläche, nämlich die Gegenlauffläche des Lagers, auf. Insbesondere ist die Gegenlauffläche Teil des Wälzkörpers des Lagers, so dass hier bereits eine optimale Oberfläche, eine Oberflächenhärte, eine Rauheit und ein gewünschter Drall gewährleistet werden kann.

Eine Axialdichtung ist vorteilhaft gegenüber einer Radialdichtung, da die Axialdichtung unempfindlich gegenüber Bewegungen in radialer Richtung ist. Dies ist vorteilhaft, weil in radialer Richtung große Bewegungen auftreten. Dies erfolgt insbesondere durch die Toleranzkette der einzelnen Bauteile, nämlich Achszapfen, Hauptlager, Rotorträger, Gehäuse der Dichtung etc. Eine Radialbewegung des aerodynamischen Rotors bzw. der Rotornabe kann zu einer Radialbewegung einer Radialdichtung führen. Hierbei kann die Gefahr bestehen, dass die Dichtungslippe der Welle nicht mehr folgen kann und es zu einer Leckage führt. Gemäß der Erfindung wird dies dadurch umgangen, dass das Lager als ein Axiallager ausgestaltet ist. Da sich das Wälzlager in einem vorgespannten System befindet, erfährt die Rotornabe in axialer Richtung kaum Bewegung, so dass dies vorteilhaft für die Axialrichtung ist.

Mit der Axialdichtung kann eine Abdichtung des Hauptlagers der Windenergieanlage gegenüber einem Schmierfett oder einem Schmieröl gewährleistet sein. Somit kann eine Performancesteigerung der Abdichtung, eine Reduktion der Wartungsarbeiten aufgrund von Fettleckagen und eine deutliche Erhöhung der Arbeitssicherheit ermöglicht werden.

Die Dichtung weist einen Dichtungsträger auf, welcher mit dem Rotorträger gekoppelt ist. An einer gegenüberliegenden Seite des Dichtungsträgers ist die Dichtung bzw. die Dichtlippe vorgesehen, welche an einer Gegenlauffläche anliegt. Somit wird ein Volumen zwischen dem Dichtungsträger und den Komponenten des Lagers gebildet, welches dazu geeignet ist, Fett zur Schmierung aufzunehmen.

Die Dichtung kann kreisförmig ausgestaltet sein, um an der Gegenlauffläche entlang des Umfangs anzuliegen, um eine komplette Dichtung zu gewährleisten.

Gemäß einem Aspekt der vorliegenden Erfindung liegt die Dichtlippe an einem Abschnitt des Innenrings an, so dass die Gegenlauffläche einen Abschnitt des Innenrings darstellt. Dies ist vorteilhaft, weil damit auf ein weiteres gehärtetes Bauteil verzichtet werden kann. Vielmehr wird der bereits vorhandene gehärtete Abschnitt des Innenringes als Gegenlauffläche für die Dichtlippe verwendet.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt einen schematischen Querschnitt einer Windenergieanlage,
- Fig. 3: zeigt einen schematischen vergrößerten Querschnitt eines Hauptlagers gemäß einem Aspekt,
- Fig. 4: zeigt einen schematischen vergrößerten Ausschnitt eines Querschnitts einer Windenergieanlage,
- Fig. 5A und 5B: zeigen jeweils einen schematischen Querschnitt einer Dichtung,
- Fig. 6: zeigt einen schematischen Querschnitt eines Lagers zwischen einem Achszapfen und einer Rotornabe, und
- Fig. 7: zeigt einen vergrößerten Querschnitt mit einem Lager und einer Axialdichtung.

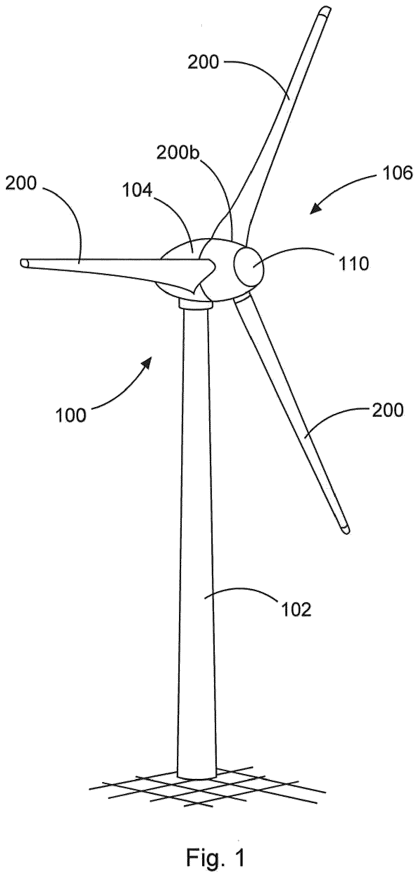

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln 200b der jeweiligen Rotorblätter 200 verändert werden.

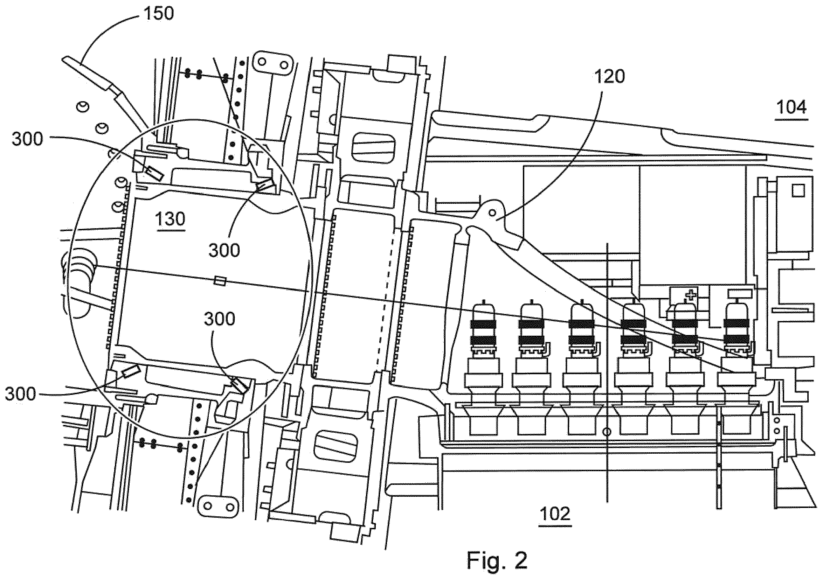

Fig. 2 zeigt einen schematischen Querschnitt einer Windenergieanlage. Auf einem Turm 102 der Windenergieanlage 100 ist ein Maschinenträger 120 drehbar gelagert. An den Maschinenträger 120 schließt ein Achszapfen 130 an, welcher drehfest mit dem Maschinenträger 120 gekoppelt ist. Der Achszapfen 130 trägt mittels des Lagers 300 eine Rotornabe 140. An der Rotornabe 150 können die Rotorblätter 200 befestigt sein.

Gemäß der Erfindung weist das Lager 300 eine Axialdichtung 400 auf.

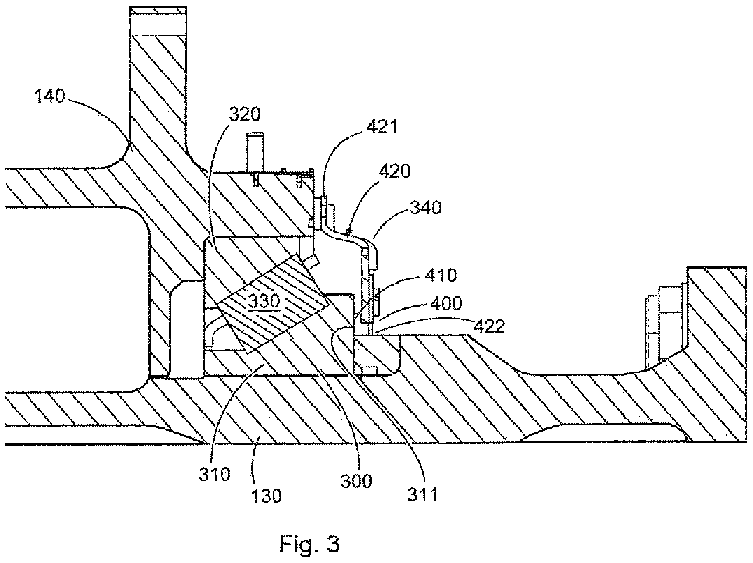

Fig. 3 zeigt einen schematischen vergrößerten Querschnitt eines Hauptlagers gemäß einem Aspekt. Zwischen einem Achszapfen 130 und dem Rotorträger 140 ist ein Lager 300, insbesondere ein Rollenlager, mit einem Innenring 310, einem Außenring 320 und einem Rollenlager 330 vorgesehen. Der Innenring 310 kann mit dem Achszapfen 130 und der Außenring 320 kann mit dem Rotorträger 140 gekoppelt sein. Des Weiteren ist eine Axialdichtung 400 für das Lager vorgesehen. Die Axialdichtung weist eine Dichtung 410 und einen Dichtungsträger 420 auf. Der Dichtungsträger 420 ist an einer Seite 421 an den Rotorträger 140 gekoppelt. An einer zweiten Seite 422 ist der Dichtungsträger 420 mit der Dichtung 410 gekoppelt. Die Dichtung 410 liegt an einer Gegenlauffläche 311 an.

Optional kann die Gegenlauffläche 311 einen Teil des Innenrings 310 des Lagers 300 darstellen. Damit liegt die Dichtlippe 410 dann an dem Innenring 310 an. Durch das Lager einerseits und durch den Dichtungsträger andererseits wird ein Volumen ausgebildet, in welchem Fett zur Schmierung des Rollenlagers vorgesehen sein kann. Durch die Axialdichtung 410 wird gewährleistet, dass kein Fett aus der Schmierkammer austreten kann.

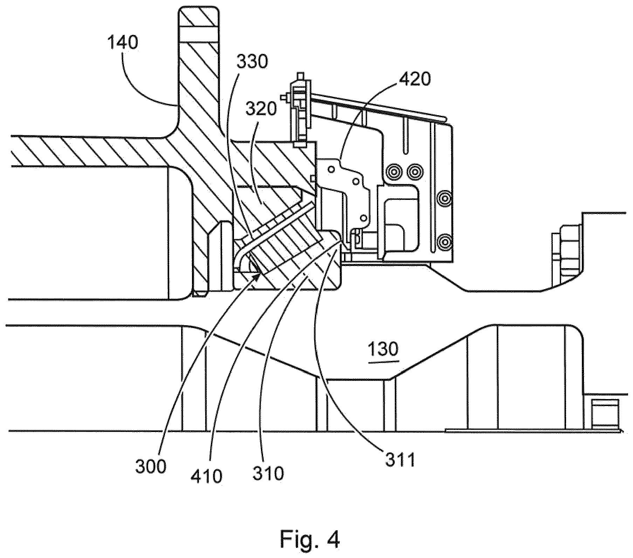

Fig. 4 zeigt einen schematischen vergrößerten Ausschnitt eines Querschnitts einer Windenergieanlage. In Fig. 4 ist ein weiteres Beispiel für die Ausgestaltung des Hauptlagers und der Lagerdichtung dargestellt. Das Lager 300 (insbesondere ein Rollenlager) weist einen Innenring 310 auf, welcher mit dem Achszapfen 130 gekoppelt sein kann. Ferner weist das Lager 300 einen Außenring 320 auf, welcher mit dem Rotorträger 140 gekoppelt sein kann.

Des Weiteren weist das Lager 300 ein Rollenlager 330 zwischen dem Innen- und Außenring 310, 320 auf. Ferner ist eine Dichtungsanordnung 400 vorgesehen, welche einen Dichtungsträger 420 und eine Dichtung 410 beispielsweise in Form einer Dichtlippe aufweist. Die Dichtlippe 410 kann an einer Gegenlauffläche 311 anliegen. Die Gegenlauffläche 311 kann Teil des Innenrings 310 sein.

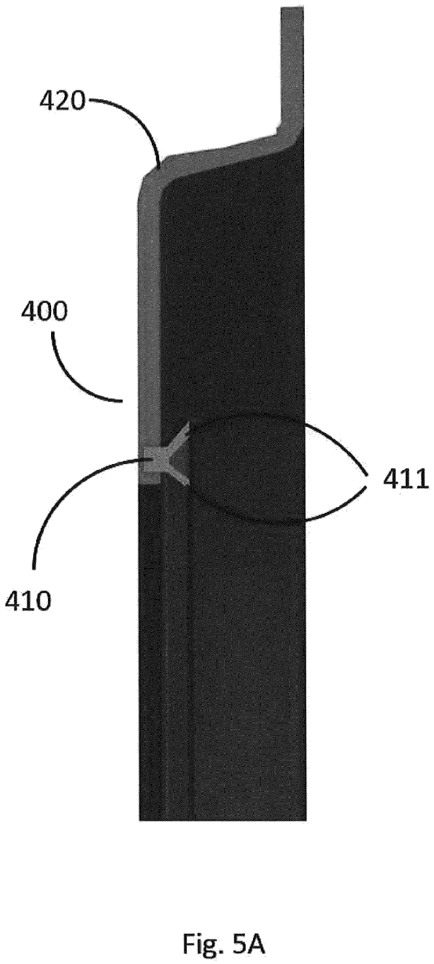

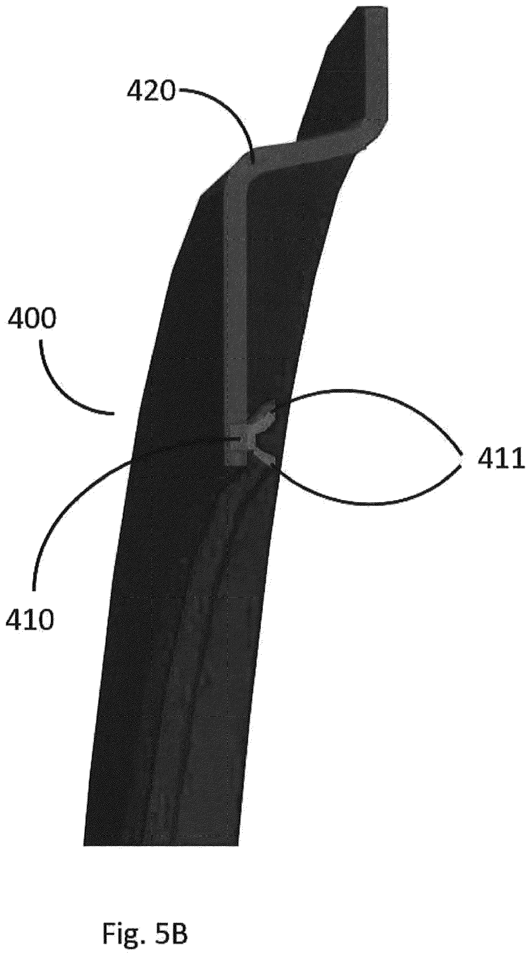

Fig. 5A und 5B zeigen jeweils einen schematischen Querschnitt einer Dichtung. Die Dichtanordnung 400 weist eine Dichtlippe 410 und einen Dichtungsträger 420 auf, welcher beispielsweise an einem Rotorträger 140 befestigt werden kann. Die Dichtung 410 kann zwei Dichtlippen 411 aufweisen, welche jeweils an der Gegenlauffläche 311 anliegen.

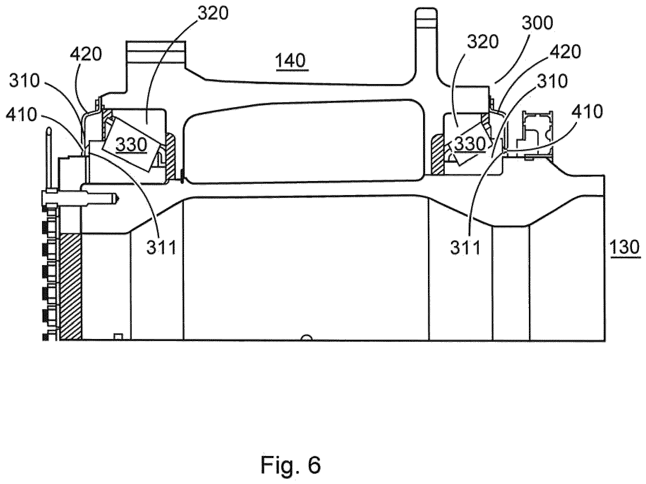

Fig. 6 zeigt einen schematischen Querschnitt eines Lagers zwischen einem Achszapfen und einem Rotorträger. In Fig. 6 sind zwei Lager jeweils mit einem Innenring 310, einem Außenring 320 und einem Rollenlager 330 gezeigt. An beiden Seiten ist eine Dichtungsanordnung mit einem Dichtungsträger 420 und einer Dichtung 410 vorgesehen. Die Dichtlippen 411 liegen jeweils an Gegenlaufflächen 311 an.

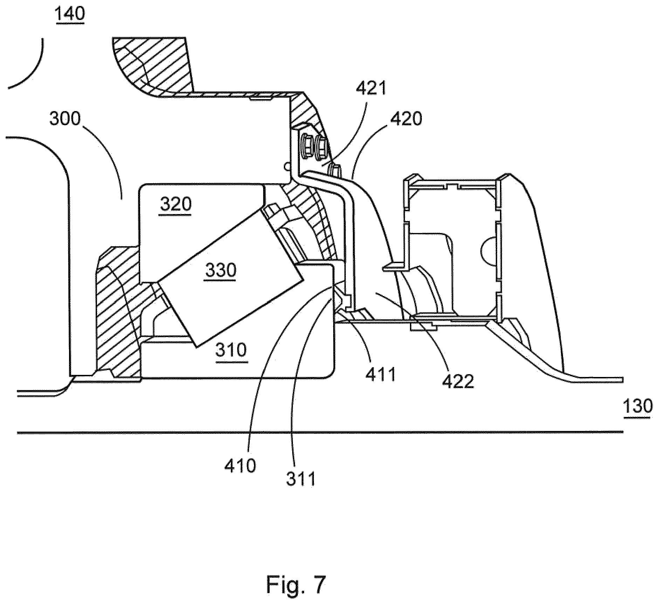

Fig. 7 zeigt einen vergrößerten Querschnitt mit einem Lager und einer Axialdichtung. In Fig. 7 ist der Bereich des Lagers vergrößert dargestellt. Das Lager 300 weist einen Innenring 310, einen Außenring 320 sowie ein Rollenlager 330 auf. Ferner ist eine Dichtung 410 mit einem Dichtungsträger 420 und einer Dichtlippe 411 vorgesehen, welche an einer Gegenlauffläche 311 anliegen kann. Die Gegenlauffläche 311 ist vorzugsweise ein Teil des Innenringes. Der Dichtungsträger 420 ist beispielsweise an dem Rotorträger 140 befestigt, so dass sich der Dichtungsträger 420 zusammen mit dem Rotorträger 140 dreht. Dies führt auch zu einer kreisförmigen Drehung der Dichtung 410.

### Bezugszeichenliste

- 100: Windenergieanlage
- 102: Turm
- 104: Gondel
- 106: Rotor
- 110: Spinner
- 120: Maschinenträger
- 130: Achszapfen
- 140: Rotorträger
- 150: Rotornabe
- 200: Rotorblätter
- 200b: Rotorblattwurzeln
- 300: Lager
- 310: Innenring
- 311: Gegenlauffläche
- 320: Außenring
- 330: Rollenlager
- 400: Axialdichtung
- 410: Dichtung
- 411: Dichtlippen
- 420: Dichtungsträger
- 421: erste Seite
- 422: zweite Seite

## Patentansprüche

1. Windenergieanlage (100), mit
einem Rotor (106) mit einem Rotorträger (140), einem Maschinenträger (110),
einem Achszapfen (130), welcher drehfest mit dem Maschinenträger (110) gekoppelt ist,
einem Drehlager (300) zwischen dem Achszapfen (130) und dem Rotorträger (140), und
einer Dichtung (400), welche als Axialdichtung ausgestaltet ist und eine Dichtlippe (411) aufweist, welche an einer Gegenlauffläche (311) anliegt, welche Teil des Lagers (300) ist.

2. Windenergieanlage (100) nach Anspruch 1, wobei
das Lager (300) einen Innenring (310), einen Außenring (320) und ein Rollenlager (330) aufweist,
wobei die Gegenlauffläche (311) Teil des Innenrings (310) darstellt.

3. Windenergieanlage (100) nach Anspruch 1 oder 2, wobei
die Dichtung (400) einen Dichtungsträger (420) aufweist, welcher an dem Rotorträger (140) befestigt ist und eine Dichtlippe (410) gegen die Gegenlauffläche (311) drückt.
